# EUROPEAN PATENT SPECIFICATION

(11) **EP 1 217 591 B1**
(45) Date of publication and mention of the grant of the patent: **02.04.2014**
(21) Application number: 01310568.9
(22) Date of filing: 18.12.2001
(51) Int. Cl.: G06F 21/10, G06Q 20/12, G06Q 20/14, G06Q 20/32, G06Q 30/06, H04L 29/06, H04N 7/173, H04N 21/2543, H04N 21/61, H04N 21/8355

(54) **Improvements in and relating to the distribution of content**
Verbesserungen bei bzw. im Bezug auf die Verteilung von Inhalten
Améliorations apportées à la diffusion de contenu

(30) Priority: 21.12.2000 GB 0031367; 09.02.2001 US 267490 P
(43) Date of publication of application: 26.06.2002
(73) Proprietor: Nokia Corporation, 02150 Espoo (FI)
(72) Inventor: Rahnasto, Ilkka, 01450 Vantaa (FI)
(74) Representative: Read, Matthew Charles

(56) References cited:
- EP-A- 0 268 139
- EP-A- 0 715 246
- WO-A-98/44402
- WO-A-99/35778
- FR-A- 2 780 800
- US-A- 5 862 260
- US-A- 5 982 891
- US-A- 6 084 951

## Description

The present invention relates to the distribution of content over networks, particularly although not exclusively content having copyright therein.

The distribution of content over a network or networks is a matter of prime concern to those holding rights associated with such content. The relative ease with which content of a digital character can be copied and in particular forwarded over a network to a multiplicity of recipients severely impacts the licensing potential for such content.

Hitherto, various proposals have been made to counter the loss in revenue to right holders. Broadly, these have constituted, on the one hand, the creation of technical barriers to unauthorised copying of content and on the other hand, the development of transactional controls. In many cases both approaches have been used in tandem to strictly control the distribution of content to authorised recipients namely those users who have paid the appropriate fee to the right holder.

In order to prevent unauthorised attempts to obtain the content, it has been found necessary to develop techniques that are ever more sophisticated. Consequently, the processing demands of the equipment used to generate, distribute and receive such content have inevitably grown. At the same time, the complexity and range of networks over which content may be distributed has changed such that a variety of different networks, protocols and applications may be employed.

Commercially, the impact of the above developments has been to dissuade right holders from making the investment necessary to allow access to their content such as video and audio recordings, for example.

US 5,862,260 checks computers for watermarked data.

Thus, according to one aspect of the present invention, there is provided a network device for connection in a communication path of a network including a controller operable to detect a predetermined tag within content passing along the path, and in response to said detection to generate a report identifying said detection and identifying a sender and/or recipient of said content and to address said report to an external monitoring centre.

The device may be integrated with existing equipment or provided as a separate element of the particular network architecture. Conveniently, the device could also provide routing functions in a packet switched network such as TCP/IP or ATM. The device may be utilised in predominantly circuit switched networks such as second generation Public Land Mobile Networks (PLMN) as exemplified by GSM. In these networks, so-called short messages of a textual and/or audio nature may be delivered between terminals as datagrams. Such messages pass through a short messaging centre which may incorporate the device. Consequently, datagrams comprising content with which digital rights are associated may be detected.

According to another aspect of the present invention, a method of monitoring content transmitted over a network comprises detecting a predetermined tag within content passing through the network; in response to said detection, generating a report identifying said detection together and identifying a sender and/or recipient of said content; addressing said report to an external monitoring centre.

Preferably, the tag is associated with the content before it is made available for transmission over the network. Thus the tag, which may be suitably encrypted and/or concealed may take the form of a watermark, flag in the header or otherwise embedded in the content. As an alternative or adjunct to encrypting the tag, the transmission itself may be encrypted. In addition, the content may be generated to include spoiler code to prevent its playback, for example, if the tag is removed.

The tag is associated with the content by a right holder or a party authorised by him, during the preparation of the content for distribution by any suitable channel. The content and tag could be carried on any suitable data carrier such as a compact Disc (CD) Digital Versatile Disc (DVD) or other means of distribution including making it available for download for a fee from a website. As a result, any subsequent dealings with the content such as uploading it to a network for distribution as an MP3 file for example would result in the tag being available for detection.

According to a further aspect of the present invention, there is provided a system for monitoring the transmission of content between networked terminals comprising: a network device as recited above located in a communication path of a network; and a monitoring centre connected to receive said report from a network device for connection in a communication path of a network including a controller operable to detect a predetermined tag within content passing along the path, in response to said detection, to generate a report identifying said detection and identifying a sender and/or recipient of said content and to address said report to an external monitoring centre..

Preferably, the device is placed in a communication path through which substantially all traffic carried by that network passes. Clearly, where network conditions dictate, then a number of such devices may be utilised in different parts of the network to carry respective portions of the traffic. Where more than one network is involved in the transmission of the content then each device may selectably report information relating to a sender or recipient of said content. Consequently, the number of reports generated is kept to a minimum and in addition multiple reporting of content as it passes through the or each network is avoided. This results in reduced network load and simplifies any resultant action taken as a result of such reporting including billing the sender or recipient for the transmission of said content.

According to a still further aspect of the present invention, there is provided a revenue collection system for collecting revenue due on content passing through a network, comprising a system as recited above, the monitoring centre being operable to issue a request to a billing entity to carry out a transaction in relation to said sender and/or recipient.

The monitoring centre may be integrated with the device such that both fall under the control of a party responsible for the network in which they are located. Such a scenario provides benefits to the operator of a PLMN or ISP who could integrate the billing for transfer of such content with his normal operations whilst keeping the information generated thereby within the confines of his network. However, in some circumstances, perhaps where a copyright collection authority wishes not only to carry out billing but also to monitor usage, then the centre could be located remotely of the device perhaps in a separate network to which the device addresses its reports.

According to yet another aspect of the present invention, there is provided a revenue collection method for collecting revenue due on predetermined content transmitted over a network comprises a method as recited above, and further comprises obtaining an address of the sender and/or recipient of said content, and requesting a billing entity to carry out a transaction in relation to said sender and/or recipient.

The invention provides an open solution to the problem of digital rights management of copyright content in particular. Content may be received in a terminal from an external source and then passed to another terminal where the content can accessed without any effect on the embedded tag. Such an open solution provides immense benefits in that it may be applied to existing technology without the need for modification of terminals, in particular. Hitherto, as has previously stated, digital rights management requires the presence of encryption, decryption and digital right management software on the terminal. Furthermore, the invention is applicable to any network or combination of networks where billing structures exist or could be implemented to bill usage of terminals connected to that network. Thus, PC usage could be billed by a respective ISP and mobile terminal usage could be billed by a respective network operator. Clearly, the level of information reported for the purposes of billing or the like could be increased from a minimum namely that the material is controlled in the sense that it may be copyright to add details of the distributor, record company and artiste in the case of a musical work, for example. Such additional rights management information is particular useful in establishing a revenue distribution arrangement for right holders.

It will also be desirable to provide a terminal user with the option to abort any attempt he might make to forward controlled content which, by implication could involve him in being billed. The terminal user will be asked to confirm his request to send controlled content together with an indication of the expected cost. Such a confirmation request could be responded to simply by selecting send or reject as actions via the terminal user interface. Most conveniently, the option could be generated on the network side in response to a request received from the terminal to send controlled content. This would avoid any need for a terminal implementation. However, the terminal could be provided with the resources necessary to identify controlled content before sending the content onto the network. Advantageously, there could further be provided a mechanism whereby on identification of such content the user is given the option to send the content once a predetermined billing activity has successfully been completed over the network with a credit card company or the like.

In order to understand the present invention more fully, a number of embodiments thereof will now be described by way of example and with reference to the accompanying drawings, in which:
Figure 1 is a diagrammatic view of a network portion of a content distribution monitoring system according to one embodiment of the present invention;
Figure 2 is a similar view of a management portion of the content distribution system of Figure 1;
Figure 3 is a diagrammatic view of a further embodiment of the system of Figure 1;
Figure 4 is a diagrammatic view of one example of the system of Figure 2 in use.
Figure 5 is a diagrammatic view of an example of the system of Figure 1 in use;
Figure 6, is a chart illustrating the generation of content for use with the system of Figures 1,2 and 3.

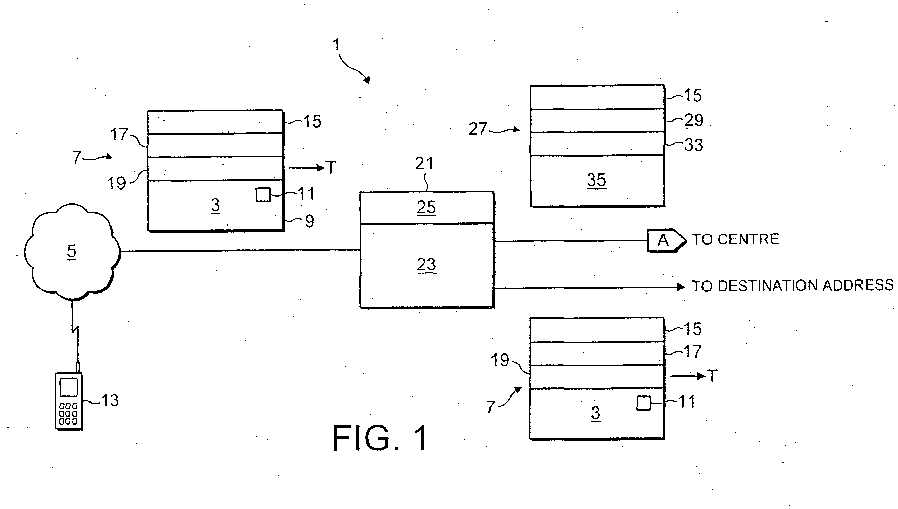

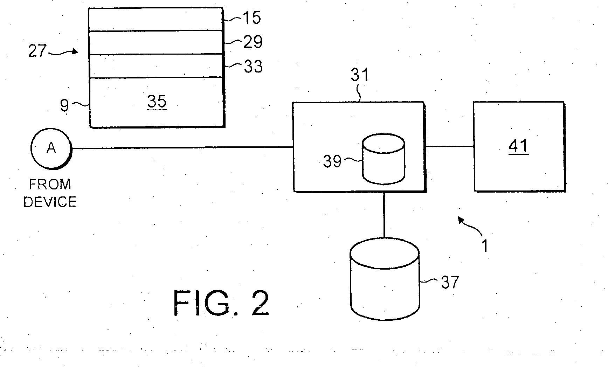

Referring to Figures 1 and 2 in particular, there is shown an embodiment of a system 1 for monitoring the distribution of content 3 over a network 5. Content 3 is encapsulated in a datagram 7 formatted in accordance with the frame type of the protocol the network 5 is operating. The datagram 7 is understood to be travelling through the network in a path indicated by an arrow marked T. The content 3 is located in a payload portion 9 of the datagram 7. Where monitoring of the content 3 is required, such as for the management of copyright and the like, a marker or tag 11 is stored together with the content 3 in the datagram 7. The introduction of the tag 11 may be carried out by software during the creation of the content 3 or indeed at a later stage either before or during generation of the datagram 7 by a device 13 able to communicate with the network 5. In addition to the payload portion 9 containing the content 3, the datagram 7 is provided with fields containing a destination address 15 and respectively the address 17 of the sender's device 13 and an initial router address 19 determined from a look-up table or similar held by the sender's device 13.

A network device 21 operated by a provider responsible for operating the network 5 in which the device 21 resides includes a filtering router 23 and controller 25. On reaching the router 23 the datagram 7 is examined and the destination address 17 is compared against a table held by the router 23 with a view to forwarding the datagram 7 to either the destination address 15 or to another router (not shown) perhaps on another network which contains the destination address 15. In the latter case, the router address 19 will reflect the location of the new router, otherwise it will correspond to the destination address. In the meantime, the controller 25 firstly examines the sender's address 15 of the datagram 7 to determine whether it originates from a device located in the same network as the controller 25 if so, the application further examines the location within the datagram 7 at which the tag 11 may be located. The exact location of the tag 11 may be concealed whilst the tag 11 itself may be encrypted. A controller application is therefore arranged to locate the tag 11 and decrypt any protection previously applied thereto. If the tag 11 is present and indicates the presence of controlled content such as copyright or classified material, for example, then the application generates an additional control datagram 27 which contains the address 15 of the originating device which is once is again stored in the originating address field. In addition, a destination address 29 is entered corresponding to the address of a monitoring centre 31 and a routing address 33 is also entered which may or may not correspond to the destination address 29 depending on whether the monitoring centre 31 can be seen by the filtering router 23. Indeed the centre 31 may be located on a different network in which case the control datagram will follow an appropriate routing to reach the centre 31 (shown in the figure by the indicia A). The controller 25 application also places a flag 35 in the payload portion 9 of the control datagram 27 to identify to the centre 31 in due course that controlled content has passed through that device 21. Alternatively, rather than have the controller 25 place a flag in the control datagram 27, the centre 31 may identify the access point into the network 5 by reference to the originating address 15.

The centre 31 receives the datagram 27 generated in the device 21 and is able to establish from the originating address 15 and the flag 35 in the payload portion 9 that controlled material has been sent by the sender's device 13. The centre 31 then contacts a billing entity 37 responsible for charging for access to the home network, in this case the network 5 in which the device 21 is located, of the sender's device 13 with an instruction to debit an account belonging to a user of the device 13 by a predetermined sum. The billing entity 37 responds to the request by crediting a revenue account held by the operator of the centre 31 with the sum and logs the debit on the user's account record. In the meantime, the centre 31 logs the receipt of the datagram 27 in a memory 39 together with the flag data 35.

Subsequently, parties such as right holders having an interest in the controlled content 3 are provided with an apportionment of the sums deposited in the revenue account. The precise apportionment of the sums to each party may be established by separate negotiation and/or through an analysis of the log held by the centre via a link to a collection authority server 41. Thus, in one variant of the embodiment, the flag 35 contains additional indicia identifying one if not all of the following, namely the copyright holder, distributor, record company, artist, additional or alternative fields may, of course be included for other non-musical works, for example. It will also be apparent that the centre 31 may be independent of the control of the network operator responsible for the network device 21. Accordingly, some portion of the revenue collected by the centre 31 may be apportioned to the operator of the device 21. Clearly, where more than one such device 21 each located in a different home network is responsible for forwarding datagrams to the centre 31, the apportionment may vary depending on the level of content transmitted by users of each home network. Again, this apportionment could be determined by separate agreement or more likely through examination of the log in memory 39 to reveal the owner of the network device 21 responsible for forwarding the control datagram 27.

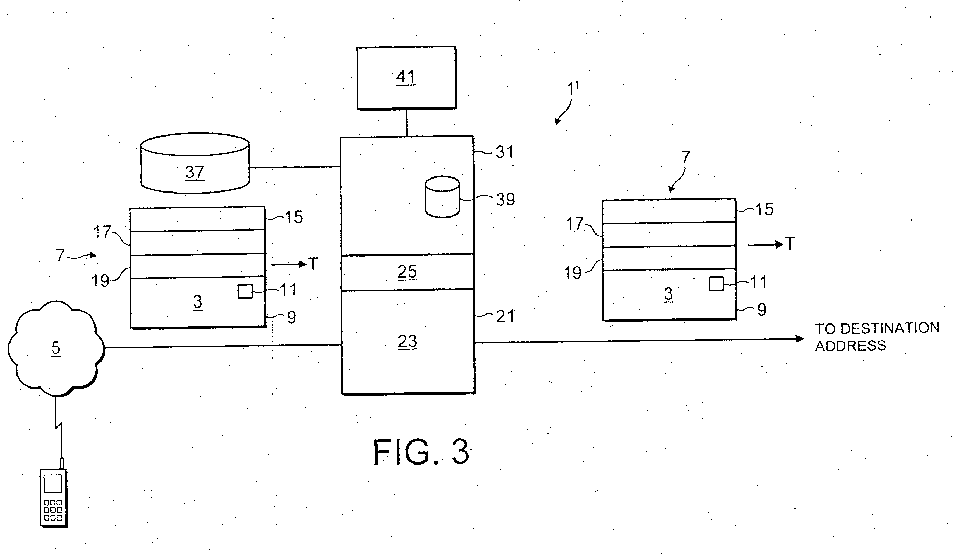

Figure 3 shows another embodiment of a system for system for monitoring the distribution of content over a network. As previously stated in relation to the earlier embodiment, content is encapsulated in a datagram formatted in accordance with the frame type of the protocol the network is operating.

Indeed, in all other respects the datagram is no different to that previously described and the same reference numerals will be utilised where appropriate.

In this further embodiment, the monitoring centre 31 is integrated with the network device 21. Consequently, the network operator responsible for the network device 21 has authority over the system 1'. Thus, rather than the controller 25 application generate an additional datagram, the information necessary to generate revenue for the right holders is extracted by the application and passed directly to the centre 31. Although the combination of the network device 21 and centre 31 could be arranged to receive control datagrams from external networks, this would necessitate the provision of a link to the billing entities of those external networks. Otherwise, it is only necessary for the centre to have a link to the billing entity 37 of its own network and, of course, provision for right holders to access the log held in memory 39.

In use, content 3, the transmission of which should result in revenue being generated for the appropriate right holder, may enter, leave and transit a network or set of networks in a number of ways. The following examples illustrate at least some of the potential scenarios.

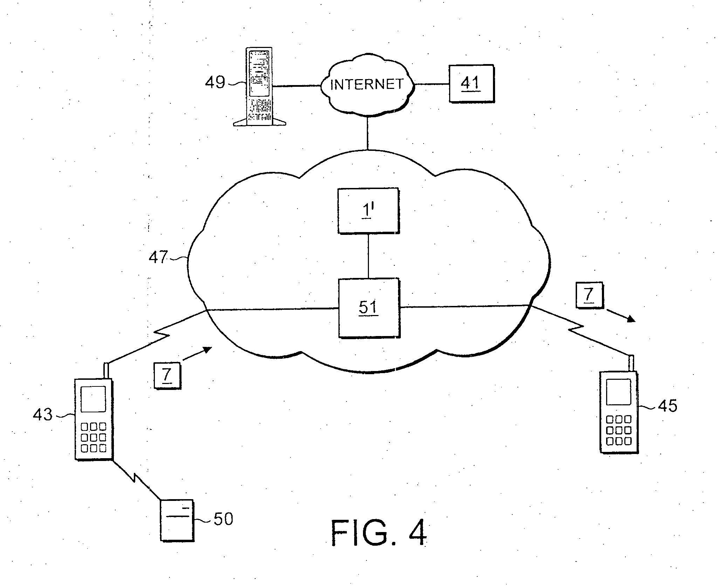

Thus, Figure 4 illustrates the transfer of controlled content from a first terminal 43 to a second terminal 45, both of which are connectable to a common network, namely a Public Land Mobile Network (PLMN) 47. The controlled content to be sent from the first terminal may have been previously downloaded from a distribution point such as a website 49 of a right holder or uploaded from another device such as an MP3 player 50 or the like connected to the first terminal 43. In order to forward the content, the device 43 places the content into a datagram 7 which, in the manner well known to the art, is passed over the network 47 to the recipient terminal 45 via a messaging centre 51, once a preliminary step of confirming the transfer and billing amount has been completed. Connected to the messaging centre 51 is a combined network device 21 and monitoring centre 31 corresponding to the further embodiment 1' of the invention. Subsequently, the sender's address is derived from the datagram 7, which in the case of a GSM network could be a short message (SM), and is used by the billing entity of the network 47 to charge the account corresponding to the first (sending) terminal. Thus, the sender's address may be a telephone number or IP address of the first terminal. In addition, as has already been described, a corresponding entry is made in the centre log which may subsequently accessed by the right holder via the collection body 41.

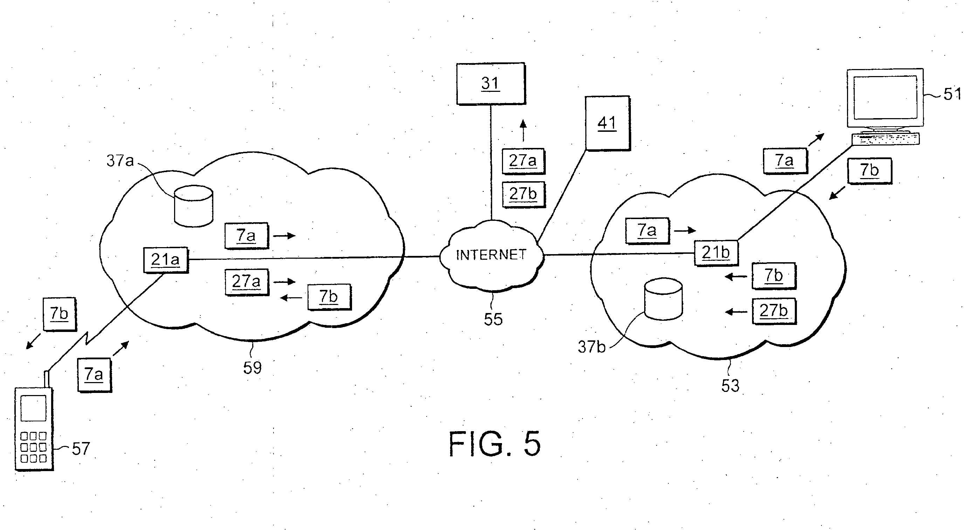

Figure 5 illustrates a transfer of controlled content between a Personal Computer (PC) 51 connectable via an Internet Service Provider (ISP) 53 to a global information network such as the Internet 55 and a mobile terminal 57 connectable to a PLMN 59. The PLMN 59 is in turn provided with a connection to the Internet 55. Each provider, namely the ISP and the PLMN operator include a network device 21a,21b within its respective network architecture 53,59. In this example, each device 21a,21b is linked to an independently operated monitoring centre 31. Thus, when a datagram 7a containing controlled content 3 is generated at the mobile terminal 57, its progress towards the PC 51 is detected by both devices 21 a, 21 b. However, only the device 21 a in the home network 59 of the mobile terminal 57, namely the PLMN 59 reports the fact by generating an additional datagram 27a addressed to the centre 31, as it recognises the sending address of the content encapsulating datagram 7a to be within its own network 59. Similarly, when a datagram 7b originating in the PC 51 is sent to the mobile terminal 57, only the device 21b in the ISP architecture 53 reports the fact with a control datagram 27b addressed to the centre 31. In a non-illustrated variant of this example, one or both devices 21 a,21 b are integrated with a monitoring centre 31 under the control of the respective home network 59,53. As was explained previously, this still results in the appropriate revenue being generated for the right holders.

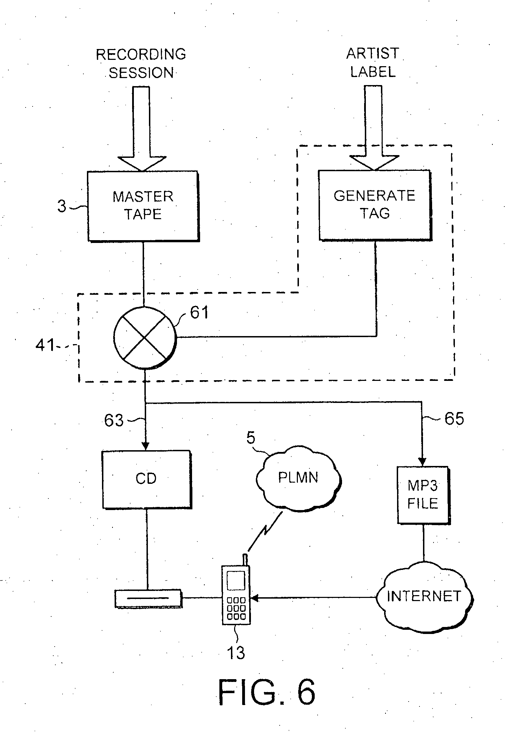

Figure 6 illustrates a service through which a tag 11 may be added to a content 3 to permit control thereof. A party authorised by the right holder prepares a master file of content 3 for ultimate distribution and forwards the content on a data carrier or electronically over a communication network or using a data carrier to a copyright collection body 41 or the like. The collection body receives the content and identifies the right holder from identity data provided by the right holder such as artist and label, for example. The collection authority may derive the right holder identity in the case of the electronically communicated content from a sender's address field. The collection body 41 then updates its record of copyright content in the name of the right holder and associates 61 the content 3 with the tag 11. Such information may be used in determining the level of apportionment of revenue to the right holder subsequently. The tagged content 3 may then be distributed by a suitable channel 63,65 to a user who is then free to upload the content to his home network 5 using his terminal 13.

Thus, content may be distributed initially on a data carrier such as a Compact Disk (CD) a Digital Versatile Disk (DVD) or memory stick, for example. The content may also be distributed electronically by offering it for download at a website, for example.

In a further non-illustrated variant a right holder or another authorised party may obtain the resources which might include software and/or hardware to place a tag on the content. The content may then be distributed as has been outlined previously. Clearly, such an approach may require separate notification to the collection body of the generation of new controlled content. This will particularly be the case where revenue apportionment is based on the amount of content of a right holder in circulation.

## Claims

1. A network device (21) for connection in a communication path of a network, the network devices including a controller (25) operable to:
detect a predetermined tag within content passing along the path;
in response to said detection, generate a report identifying said detection and identifying a sender and/or recipient of said content; and
address said report to an external monitoring centre (31).

2. A system for monitoring the transmission of content between networked terminals comprising:
a network device (21) as claimed in claim 1 located in a communication path of a network; and
a monitoring centre (31) connected to receive said report from said network device (21).

3. A system as claimed in claim 2, wherein the monitoring centre (31) is operable to receive reports from a plurality of networks each having at least one controller (25).

4. A system as claimed in claim 2 or claim 3, further including a billing entity (37) connected to said centre.

5. A revenue collection system for collecting revenue due on content passing through a network, comprising a system as claimed in claim 2 or claim 3, the monitoring centre (31) being operable to issue a request to a billing entity (37) to carry out a transaction in relation to said sender and/or recipient.

6. A system as claimed in claim 5 wherein the transaction comprises debiting an account of said sender and/or recipient.

7. A system as claimed in claim 5 or claim 6, wherein said information includes a network identity such that said centre issues said request to a billing entity (37) responsible for said identified network.

8. A method of transmitting a message incorporating content including an embedded tag (11) from a terminal (43) connected to a network, the method comprising:
obtaining content;
placing said content into a payload portion of said message; and
transmitting said message over a network including a network device (21) for connection in a communication path of a network, the network device including a controller (25) operable to:
detect a predetermined tag within content passing along the path;
in response to said detection, generate a report identifying said detection and identifying a sender and/or recipient of said content; and
address said report to an external monitoring centre (31).

9. A method as claimed in claim 8, wherein the content is obtained by downloading from a server.

10. A method as claimed in claim 8, wherein the content is obtained from a data carrier by uploading from a suitable player.

11. A method as claimed in any one of claim 8 to 10, wherein said message comprises one or more packets.

12. A method as claimed in claim 11, wherein said tag (11) is embedded to at least one of the packets.

13. A method as claimed in claim 8, wherein the step of obtaining content comprises, generating content, determining a right holder and updating a corresponding right holder record with details of said content and associating a tag (11) with said content wherein said tag (11) is detectable by the device as claimed in claim 1.

14. A method of monitoring content which is being transmitted over a network, the method comprising:
detecting a predetermined tag (11) within content passing through the network;
in response to said detection, generating a report identifying said detection and identifying a sender and/or recipient of said content; and
addressing said report to an external monitoring centre (31).

15. A revenue collection method for collecting revenue due on predetermined content transmitted over a network comprising a method as claimed in claim 14, and further comprising obtaining an address of the sender and/or recipient of said content, and requesting a billing entity (37) to carry out a transaction in relation to said sender and/or recipient.

16. A method as claimed in claim 15, wherein said transaction comprises debiting an account of said sender and/or recipient.

17. A method as claimed in claim 15 or claim 16, including the preliminary step of determining which content revenue is to be collected by associating a tag (11) with said content prior to making it available for transmission.

18. A method as claimed in claim 17, wherein said predetermined content is captured on a data carrier.

19. A method as claimed in to claim 14, wherein the generating step comprises generating a control message by a network device (21) to be sent to a monitoring centre (31) connected to said device, the message indicating the passing of the content having the predetermined tag (11) embedded within the content through the network device (21), the control message comprising an identification of the content originating device, a destination address for the content, and a flag created by the network device (21).

20. A method as claimed in claim 19, wherein the flag identifies the network device (21).

21. A computer program comprising executable code for execution when loaded on a computer, wherein the computer is operable in accordance with said code to carry out the method as claimed in any of to claims 14 to 20.

22. A program as claimed in claim 21, stored in a computer readable medium.

## Patentansprüche

1. Netzvorrichtung (21) für den Anschluss in einem Kommunikationspfad eines Netzes, wobei die Netzvorrichtung eine Steuereinheit (25) enthält, die betreibbar ist, um:
ein vorgegebenes Etikett in Inhalt, der sich längs des Pfades bewegt, zu detektieren;
in Reaktion auf die Detektion einen Bericht zu erzeugen, der die Detektion identifiziert und einen Sender und/oder Empfänger des Inhalts identifiziert; und
den Bericht an eine externe Überwachungszentrale (31) zu adressieren.

2. System zum Überwachen der Übertragung von Inhalt zwischen vernetzten Endgeräten, das Folgendes umfasst:
eine Netzvorrichtung (21) nach Anspruch 1, die sich in einem Kommunikationspfad eines Netzes befindet; und
eine Überwachungszentrale (31), die angeschlossen ist, um den Bericht von der Netzvorrichtung (21) zu empfangen.

3. System nach Anspruch 2, wobei die Überwachungszentrale (31) betreibbar ist, um Berichte von mehreren Netzen, wovon jedes wenigstens eine Steuereinheit (25) besitzt, zu empfangen.

4. System nach Anspruch 2 oder Anspruch 3, das ferner eine Abrechungsentität (37), die mit der Zentrale verbunden ist, enthält.

5. Einnahmensammelsystem zum Sammeln von Einnahmen aufgrund von Inhalt, der sich durch ein Netz bewegt, das ein System nach Anspruch 2 oder Anspruch 3 umfasst, wobei die Überwachungszentrale (31) betreibbar ist, um an eine Abrechnungsentität (37) eine Anforderung auszugeben, um eine Transaktion in Bezug auf den Sender und/oder Empfänger auszuführen.

6. System nach Anspruch 5, wobei die Transaktion das Belasten eines Kontos des Senders und/oder Empfängers umfasst.

7. System nach Anspruch 5 oder Anspruch 6, wobei die Informationen eine Netzkennung enthalten, derart, dass die Zentrale die Anforderung an eine Abrechnungsentität (37) in Reaktion auf das identifizierte Netz ausgibt.

8. Verfahren zum Übertragen einer Nachricht, die Inhalt enthält, der ein eingebettetes Etikett (11) enthält, von einem mit einem Netz verbundenen Endgerät (43), wobei das Verfahren Folgendes umfasst:
Erhalten von Inhalt;
Anordnen des Inhalts in einem Nutzlastabschnitt der Nachricht; und
Senden der Nachricht über ein Netz, das eine Netzvorrichtung (21) für die Verbindung in einem Kommunikationspfad eines Netzes enthält, wobei die Netzvorrichtung eine Steuereinheit (25) umfasst, die betreibbar ist, um:
ein vorgegebenes Etikett in Inhalt, der sich längs des Pfades bewegt, zu detektieren;
in Reaktion auf die Detektion einen Bericht zu erzeugen, der die Detektion identifiziert und einen Sender und/oder Empfänger des Inhalts identifiziert; und
den Bericht an eine externe Überwachungszentrale (31) zu adressieren.

9. Verfahren nach Anspruch 8, wobei der Inhalt durch Herunterladen von einem Server erhalten wird.

10. Verfahren nach Anspruch 8, wobei der Inhalt von einem Datenträger durch Hochladen von einem geeigneten Abspielgerät erhalten wird.

11. Verfahren nach einem der Ansprüche 8 bis 10, wobei die Nachricht ein oder mehrere Pakete enthält.

12. Verfahren nach Anspruch 11, wobei das Etikett (11) in wenigstens eines der Pakete eingebettet ist.

13. Verfahren nach Anspruch 8, wobei der Schritt des Erhaltens von Inhalt das Erzeugen von Inhalt, das Bestimmen eines Rechtehalters und das Aktualisieren eines entsprechenden Rechtehalter-Datensatzes mit Einzelheiten des Inhalts sowie das Zuordnen eines Etiketts (11) zu dem Inhalt umfasst, wobei das Etikett (11) durch die Vorrichtung nach Anspruch 1 detektierbar ist.

14. Verfahren zum Überwachen von Inhalt, der über ein Netz gesendet wird, wobei das Verfahren Folgendes umfasst:
Detektieren eines vorgegebenen Etiketts (11) in Inhalt, der sich durch das Netz bewegt;
in Reaktion auf die Detektion Erzeugen eines Berichts, der die Detektion identifiziert, und Identifizieren eines Senders und/oder Empfängers des Inhalts; und
Adressieren des Berichts an eine externe Überwachungszentrale (31).

15. Einnahmensammelverfahren zum Sammeln von Einnahmen aufgrund von vorgegebenem Inhalt, der über ein Netz gesendet wird, das ein Verfahren nach Anspruch 14 umfasst und ferner das Erhalten einer Adresse des Senders und/oder Empfängers des Inhalts sowie das Auffordern einer Abrechungsentität (37), eine Transaktion in Bezug auf den Sender und/oder Empfänger auszuführen, umfasst.

16. Verfahren nach Anspruch 15, wobei die Transaktion das Belasten eines Kontos des Senders und/oder Empfängers umfasst.

17. Verfahren nach Anspruch 15 oder Anspruch 16, das den vorherigen Schritt des Bestimmens, welche Inhaltseinnahmen gesammelt werden sollen, durch Zuordnen eines Etiketts (11) zu dem Inhalt umfasst, bevor der Inhalt für die Übertragung verfügbar gemacht wird.

18. Verfahren nach Anspruch 17, wobei der vorgegebene Inhalt auf einen Datenträger aufgenommen ist.

19. Verfahren nach Anspruch 14, wobei der Erzeugungsschritt das Erzeugen einer Steuernachricht durch eine Netzvorrichtung (21), die zu einer mit der Vorrichtung verbundenen Überwachungszentrale (31) geschickt werden soll, umfasst, wobei die Nachricht das Bewegen des Inhalts, in den das vorgegebene Etikett (11) eingebettet ist, durch die Netzvorrichtung (21) angibt, wobei die Steuernachricht eine Kennung der Vorrichtung, von der der Inhalt ausgeht, eine Zieladresse für den Inhalt und einen durch die Netzvorrichtung (21) erzeugten Merker enthält.

20. Verfahren nach Anspruch 19, wobei der Merker die Netzvorrichtung (21) identifiziert.

21. Computerprogramm, das ausführbaren Code enthält, der ausgeführt wird, wenn er in einen Computer geladen wird, wobei der Computer in Übereinstimmung mit dem Code betreibbar ist, um das Verfahren nach einem der Ansprüche 14 bis 20 auszuführen.

22. Programm nach Anspruch 21, das in einem computerlesbaren Medium gespeichert ist.

## Revendications

1. Dispositif de réseau (21) pour une connexion dans un chemin de communication d'un réseau, le dispositif de réseau comprenant un contrôleur (25) utilisable pour :
détecter une étiquette prédéterminée dans un contenu parcourant le chemin ;
en réponse à ladite détection, générer un rapport identifiant ladite détection et identifier un expéditeur et/ou un destinataire dudit contenu ; et
adresser ledit rapport à un centre de surveillance externe (31).

2. Système pour surveiller la transmission d'un contenu entre des terminaux en réseau comprenant :
un dispositif de réseau (21), tel que revendiqué dans la revendication 1, situé sur un chemin de communication d'un réseau ; et
un centre de surveillance (31) connecté pour recevoir ledit rapport dudit dispositif de réseau (21).

3. Système tel que revendiqué dans la revendication 2, dans lequel le centre de surveillance (31) est utilisable pour recevoir des rapports depuis une pluralité de réseaux, chacun ayant au moins un contrôleur (25).

4. Système tel que revendiqué dans la revendication 2 ou la revendication 3, comprenant en outre une entité de facturation (37) connectée audit centre.

5. Système de collecte de recettes pour collecter des recettes dues à un contenu parcourant un réseau, comprenant un système tel que revendiqué dans la revendication 2 ou la revendication 3, le centre de surveillance (31) étant utilisable pour émettre une demande à une entité de facturation (37) pour exécuter une transaction en relation avec ledit expéditeur et/ou destinataire.

6. Système tel que revendiqué dans la revendication 5, dans lequel la transaction comprend de débiter un compte dudit expéditeur et/ou destinataire.

7. Système tel que revendiqué dans la revendication 5 ou la revendication 6, dans lequel lesdites informations comprennent une identité de réseau de sorte que ledit centre émet ladite demande à une entité de facturation (37) responsable dudit réseau identifié.

8. Procédé de transmission d'un message incorporant du contenu comprenant une étiquette intégrée (11) depuis un terminal (43) connecté à un réseau, le procédé comprenant les étapes suivantes :
obtenir un contenu ;
placer ledit contenu dans une partie de données utiles dudit message ; et
transmettre ledit message sur un réseau comprenant un dispositif de réseau (21) pour une connexion dans un chemin de communication d'un réseau, le dispositif de réseau comprenant un contrôleur (25) utilisable pour :
détecter une étiquette prédéterminée dans un contenu parcourant le chemin ;
en réponse à ladite détection, générer un rapport identifiant ladite détection et identifier un expéditeur et/ou un destinataire dudit contenu ; et
adresser ledit rapport à un centre de surveillance externe (31).

9. Procédé tel que revendiqué dans la revendication 8, dans lequel le contenu est obtenu par téléchargement depuis un serveur.

10. Procédé tel que revendiqué dans la revendication 8, dans lequel le contenu est obtenu à partir d'un support de données via un chargement depuis un lecteur approprié.

11. Procédé tel que revendiqué dans l'une quelconque des revendication 8 à 10, dans lequel ledit message comprend un ou plusieurs paquets.

12. Procédé tel que revendiqué dans la revendication 11, dans lequel ladite étiquette (11) est intégrée à au moins un des paquets.

13. Procédé tel que revendiqué dans la revendication 8, dans lequel l'étape comprenant d'obtenir un contenu comprend de générer un contenu, de déterminer un ayant droit et de mettre à jour un enregistrement d'ayant droit correspondant avec des informations détaillées dudit contenu et d'associer une étiquette (11) avec ledit contenu, où ladite étiquette (11) est détectable par le dispositif, comme que cela est revendiqué dans la revendication 1.

14. Procédé de surveillance de contenu qui est transmis sur un réseau, le procédé comprenant les étapes suivantes :
détecter une étiquette prédéterminée (11) dans un contenu traversant le réseau ;
en réponse à ladite détection, générer un rapport identifiant ladite détection et identifier un expéditeur et/ou un destinataire dudit contenu ; et
adresser ledit rapport à un centre de surveillance externe (31).

15. Procédé de collecte de recettes pour collecter des recettes dues à un contenu prédéterminé transmis sur un réseau, comprenant un procédé tel que revendiqué dans la revendication 14, et comprenant en outre d'obtenir une adresse de l'expéditeur et/ou du destinataire dudit contenu et d'effectuer une demande auprès d'une entité de facturation (37) pour exécuter une transaction en relation avec ledit expéditeur et/ou destinataire.

16. Procédé tel que revendiqué dans la revendication 15, dans lequel ladite transaction comprend de débiter un compte dudit expéditeur et/ou destinataire.

17. Procédé tel que revendiqué dans la revendication 15 ou la revendication 16, comprenant l'étape préliminaire comprenant de déterminer quelle recette de contenu doit être collectée en associant une étiquette (11) audit contenu avant de le rendre disponible pour sa transmission.

18. Procédé tel que revendiqué dans la revendication 17, dans lequel ledit contenu prédéterminé est capturé sur un support de données.

19. Procédé tel que revendiqué dans la revendication 14, dans lequel l'étape de génération comprend de générer un message de contrôle par un dispositif de réseau (21) à envoyer à un centre de surveillance (31) connecté audit dispositif, le message indiquant le passage du contenu ayant l'étiquette prédéterminée (11) intégrée dans le contenu à travers le dispositif de réseau (21), le message de contrôle comprenant une identification du dispositif source du contenu, une adresse de destination pour le contenu et un indicateur créé par le dispositif de réseau (21).

20. Procédé tel que revendiqué dans la revendication 19, dans lequel l'indicateur identifie le dispositif de réseau (21).

21. Programme informatique comprenant un code exécutable pour une exécution lorsqu'il est chargé sur un ordinateur, où l'ordinateur est utilisable conformément audit code pour exécuter le procédé tel que revendiqué dans l'une quelconque des revendications 14 à 20.

22. Programme, tel que revendiqué dans la revendication 21, stocké sur un support lisible par ordinateur.
